# FASCICULE DE BREVET EUROPEEN

(11) **EP 3 158 657 B1**
(45) Date de publication et mention de la délivrance du brevet: **08.03.2023**
(21) Numéro de dépôt: 15766183.6
(22) Date de dépôt: 19.06.2015
(51) Int. Cl.: H04B 5/00, H04M 1/72412, H04W 84/18

(54) **DISPOSITIF DE COMMUNICATION COURTE DISTANCE**
KURZDISTANZKOMMUNIKATIONSVORRICHTUNG
SHORT DISTANCE COMMUNICATION DEVICE

(30) Priorité: 23.06.2014 FR 1455798
(43) Date de publication de la demande: 26.04.2017
(73) Titulaire: Orange, 92130 Issy-les-Moulineaux (FR)
(72) Inventeur: BRICHETEAU, Dimitri, F-35000 Rennes (FR); VINCENT, Yoann, 94230 Cachan (FR)
(86) Numéro de dépôt international: PCT/FR2015/051635
(87) Numéro de publication internationale: WO 2015/197956

(56) Documents cités:
- EP-A1- 2 432 277
- WO-A1-2009/104131
- WO-A1-2013/161705
- US-A1- 2009 111 378

## Description

La présente invention concerne le domaine des communications courte-distance entre équipements électroniques.

Au sein du réseau local familial (ex. le réseau local - WiFi ou filaire - crée par la passerelle Internet dans un domicile), le nombre de fonctionnalités multimédia associées aux équipements électroniques connectés augmente de manière significative depuis les dernières années : ces équipements peuvent être des enceintes audio sans fil, des clefs USB, des détecteurs de présence, des casques audio, etc.

Afin de pouvoir interagir avec ces équipements (ex. pour pouvoir les configurer ou consulter leur contenu), les passerelles Internet peuvent proposer des interfaces minimalistes à l'aide d'écran LED ou LCD.

Néanmoins, ces écrans sont souvent de tailles réduites et leur consultation peut être difficile en fonction de la position de la passerelle dans le domicile (ex. dans un meuble de télévision, dans un tiroir).

Par ailleurs, l'utilisation d'une connexion sans fil courte distance pour initier un partage d'informations est connu de l'art antérieur, par exemple US 2009/111378 A1.

Ainsi, il existe un besoin pour, lors d'une interaction avec un équipement électronique par un utilisateur, de faciliter l'expérience de ce dernier.

La présente invention vient améliorer la situation.

À cet effet, la présente invention propose de manière avantageuse un dispositif de communication permettant de déporter certains éléments d'interaction auprès d'un terminal tiers.

La présente invention vise alors un dispositif de communication configuré pour communiquer avec un terminal grâce à une connexion sans fil courte distance, le terminal comprenant plusieurs fonctions, chaque fonction courante desdites fonctions pouvant être exécutée à l'aide d'un identifiant de fonction propre à ladite fonction courante.

Le dispositif de communication comprend une pluralité de dispositifs d'interaction et est configuré pour :
/a/ détecter un événement relatif à un dispositif d'interaction parmi lesdits dispositifs d'interaction, le dispositif d'interaction étant un port USB, ledit événement étant un branchement d'un dispositif de stockage USB, et étant associé à un identifiant de fonction;
/b/ émettre un message comprenant l'identifiant de fonction et destiné à exécuter une fonction correspondante dudit terminal détecté ;
/c/ recevoir, depuis le terminal, et via un réseau local, une requête d'accès en lien avec ledit événement détecté, ladite requête d'accès étant une requête d'accès au contenu du dispositif de stockage USB.

On appelle « connexion sans fil courte distance » une connexion réseau ou électromagnétique permettant la transmission d'informations (ex. des octets ou simplement un champ magnétique) sur quelques centimètres ou quelques mètres, mais sans dépasser une dizaine de mètres (ex. 30m).

On appelle « fonction d'un terminal » un procédé pouvant être mis en oeuvre dans le terminal, ce procédé pouvant être une partie d'une application, un calcul, etc.

Sur présentation de l'identifiant de fonction au terminal, ou à une application du terminal, la fonction correspondant à l'identifiant peut alors être appelée et exécutée. L'identifiant peut correspondre à une série de chiffres (éventuellement représentée sous forme hexadécimale) ou à une suite de caractères alphanumériques (correspondant par exemple au nom de la fonction).

L'émission /b/ n'est pas nécessairement exécutée immédiatement après la détection /al. D'autres étapes ou échanges de messages entre le terminal et le dispositif de communication peuvent survenir.

La requête d'accès reçue est en lien avec l'événement détecté. Ce lien est un lien logique. L'événement est une connexion d'un support de stockage au dispositif de communication, la requête étant une requête d'accès au contenu de ce support de stockage. La requête peut également être implicite : dans cette situation, la simple mention de l'identifiant de l'événement de la fonction dans la requête permet au dispositif de communication de connaître le détail de la requête souhaitée (ex. si l'identifiant est un identifiant associé à un événement de connexion d'une enceinte Bluetooth, il est possible qu'une seule requête soit possible avec cet événement : la configuration de cette enceinte).

Cette requête permet ainsi au terminal de connaître, sur détection d'un événement d'interaction, les données relatives à cet événement, de la manière la plus transparente possible.

En outre, le dispositif de communication peut être configuré pour réitérer l'émission /b/ tant qu'un sous-ensemble prédéterminé d'au moins une des conditions suivantes n'est pas rempli :
(i) un délai entre la première émission dudit message et la réitération a dépassé un temps prédéterminé ;
(ii) le dispositif de communication a reçu une requête conforme à l'étape Ici ;
(iii) le nombre de réitérations a dépassé un nombre prédéterminé.

Cette réitération peut permettre de s'assurer que le message émis soit effectivement capté par le terminal à proximité (ex. pour renforcer le procédé contre une collision de paquets, une perturbation électromagnétique temporaire, une distance trop importante entre le terminal et le dispositif d'interaction).

Ces conditions permettent en outre d'éviter que le terminal ne reçoive un message dé corrélé du contexte de l'interaction.

Les conditions énoncées précédemment peuvent ne pas être toutes implémentées dans le dispositif de communication. Par exemple, seuls la condition (i) ou l'ensemble des conditions (i) et (iii) peuvent avoir être implémentés.

Si l'ensemble de conditions comporte plus d'une condition, il est possible d'arrêter la réitération dès qu'une condition de cet ensemble est remplie ou dès que toutes les conditions de cet ensemble sont remplies.

L'émission /b/ peut avantageusement être exécutée sur détection, par le dispositif de communication, d'un terminal à une distance prédéterminée dudit dispositif de communication.

Ainsi, le dispositif de communication peut attendre la présence d'un terminal à proximité pour le notifier (c.-à-d. par l'envoi dudit message) de la survenance de l'événement.

Dans un mode de réalisation particulier, le message émis de l'étape /b/ peut être en outre un message apte à permettre une détermination d'une distance au dispositif de communication par le terminal.

Ainsi, le terminal peut connaître sa distance au dispositif de communication et ainsi déterminer si le message reçu doit être traité (c.-à-d. si le message reçu lui est destiné).

En complément du port USB, un dispositif d'interaction de la pluralité de dispositifs d'interaction peut être un bouton poussoir, une connexion Bluetooth, et une connexion de type NFC.

Ainsi, en complément, un événement relatif à un dispositif d'interaction de la pluralité de dispositifs d'interaction peut également être un événement parmi l'association d'un équipement Bluetooth au dispositif de communication et l'appui sur un bouton dudit dispositif de communication.

Dans un mode de réalisation particulier, la connexion sans fil courte distance peut être une connexion de type NFC (ou par champ proche) ou une connexion de type « Bluetooth Low Energy » (ou « BLE »).

Avantageusement, l'émission dudit message peut être effectuée via la connexion sans fil courte distance.

En outre, l'émission dudit message peut être effectuée sur requête dudit terminal, via le réseau local précité.

En effet, il est possible de prévoir que, une fois le terminal détecté (par exemple via la connexion sans fil courte distance), le terminal contacte le dispositif de communication via un réseau local (un réseau WiFi domestique, par exemple) distinct du réseau généré par la connexion de courte distance.

Le dispositif de communication peut être en outre configuré pour :
- avant l'émission dudit message :
   - émettre via la connexion sans fil courte distance et à destination dudit terminal un message d'activation, message destiné à activer une application dudit terminal, et
   - recevoir de la part dudit terminal et via ledit réseau local une requête de transmission dudit identifiant de fonction.

En outre, la requête d'accès peut être une requête parmi :
- une requête déclenchant, sur réception par le dispositif de communication, un accès à des données en lien avec le dispositif d'interaction ;
- une requête déclenchant, sur réception par le dispositif de communication, une configuration d'un réseau de communication pour le terminal détecté ;
- une requête déclenchant, sur réception par le dispositif de communication, une configuration d'un appairage du terminal détecté avec un appareil lié audit dispositif d'interaction.

En outre, un procédé de communication permettant la résolution des problèmes techniques énoncés précédemment est avantageux.

Dès lors, la présente invention vise également un procédé pour la communication entre un dispositif de communication et un terminal grâce à une connexion sans fil courte distance, le terminal comprenant plusieurs fonctions, chaque fonction courante desdites fonctions pouvant être exécutée à l'aide d'un identifiant de fonction propre à ladite fonction courante, le dispositif de communication comprenant une pluralité de dispositifs d'interaction.

Le procédé comprend :
/a/ détecter un événement relatif à un dispositif d'interaction parmi lesdits dispositifs d'interaction, le dispositif d'interaction étant un port USB, ledit événement étant un branchement d'un dispositif de stockage USB sur le dispositif de communication, et étant associé à un identifiant de fonction ;
/b/ émettre un message comprenant l'identifiant de fonction et destiné à exécuter une fonction correspondante dudit terminal détecté ;
/c/ recevoir, depuis le terminal, et via un réseau local, une requête d'accès en lien avec ledit événement détecté, ladite requête d'accès étant une requête d'accès au contenu du dispositif de stockage USB.

Un programme informatique, mettant en oeuvre tout ou partie du procédé décrit ci-avant, installé sur un équipement préexistant, est en lui-même avantageux.

Ainsi, la présente invention vise également un programme informatique comportant des instructions pour la mise en oeuvre du procédé précédemment décrit, lorsque ce programme est exécuté par un processeur du dispositif de communication précédemment décrit.

Ce programme peut utiliser n'importe quel langage de programmation (par exemple, un langageobjet ou autre), et être sous la forme d'un code source interprétable, d'un code partiellement compilé ou d'un code totalement compilé.

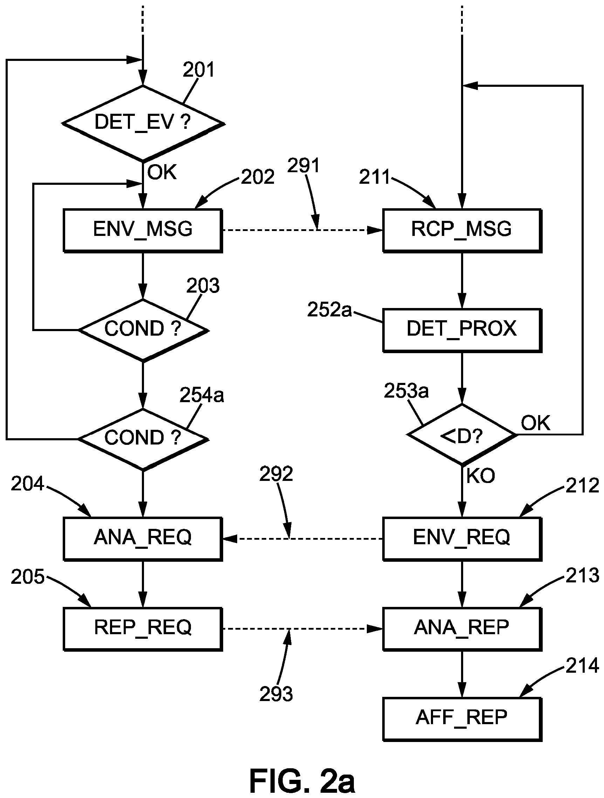

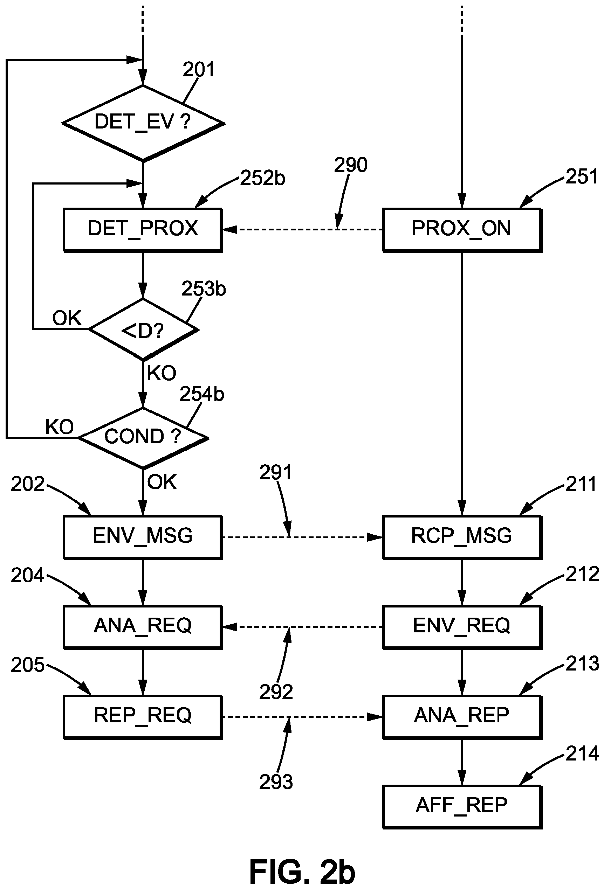

Les figures 2a et 2b décrites en détail ci-après, peuvent former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre un réseau local comprenant un dispositif de communication selon un mode de réalisation de l'invention ;
- la figure 2a présente deux ordinogrammes mis en oeuvre respectivement par un dispositif de communication selon un mode de réalisation de l'invention et par un terminal ;
- la figure 2b présente deux ordinogrammes alternatifs mis en oeuvre respectivement par un dispositif de communication selon un autre mode de réalisation de l'invention et par un terminal ;
- la figure 3 illustre un exemple de paquet, par exemple de type iBeacon^{™}, contenu dans un message émis par le dispositif de communication selon un mode de réalisation de l'invention ;
- la figure 4 illustre un dispositif de communication dans un mode de réalisation de l'invention.

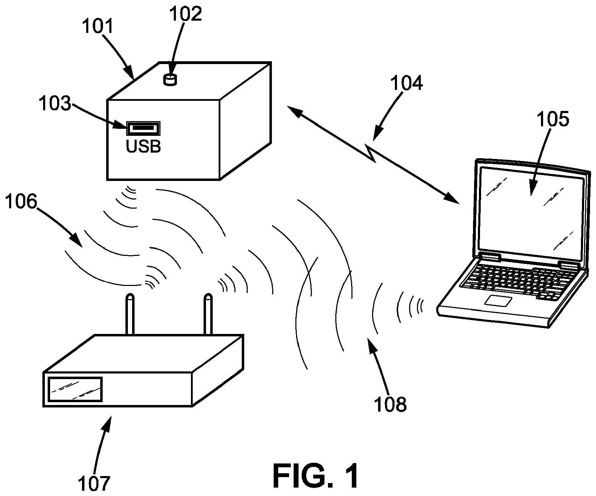

La figure 1 illustre un réseau local comprenant un dispositif de communication selon un mode de réalisation de l'invention.

Dans ce mode de réalisation, le dispositif de communication 101 comporte plusieurs dispositifs d'interaction :
- un bouton 102 avec lequel l'utilisateur peut interagir en appuyant dessus selon un procédé déterminé (ex. un appui court, un appui long, etc.),
- un port USB 103 avec lequel l'utilisateur peut interagir en insérant une clef USB ou tout autre équipement USB dedans.

Bien entendu, le dispositif de communication peut comporter d'autres dispositifs d'interaction comme des ports de type « FireBolt », « HDM », « Ethernet », « Jack » ou tout autre type de port.

Lors d'une interaction (telle que définie précédemment) avec au moins un dispositif d'interaction, le dispositif de communication 101 peut se mettre à la recherche de terminaux 105 à proximité. Cette recherche peut prendre plusieurs formes :
- émission d'un paquet de diffusion ou (« broadcast » en anglais) sur le réseau local à destination des terminaux connectés ;
- activation d'un émetteur/récepteur de type NFC (ou « de communication en champ proche ») ;
- émission d'un paquet de diffusion ou (« broadcast » en anglais) sur un réseau sans-fil (par exemple sur un réseau Bluethooth ou un réseau dit « Bluethooth Low Energy » en anglais ou BLE). Le paquet peut alors être un paquet de type iBeacon^{™}.

Le fait que le dispositif 101 se mette à la recherche de terminaux 105 à proximité signifie que ce dispositif 101 se met dans une configuration susceptible de détecter un terminal 105 à proximité (ex. activation d'un récepteur de communication en champ proche) ou susceptible de permettre une détection par un terminal 105 à proximité de la présence du dispositif 101 (ex. émission d'un message de diffusion sur un réseau).

Le réseau 104 utilisé pour cette détection peut avantageusement être distinct du réseau WiFi (réseau local) créé par la passerelle Internet.

Une fois la détection d'une proximité entre le terminal 105 et le dispositif 101 (ex. détection d'une distance inférieure à un seuil prédéterminé), le terminal 105 peut contacter le dispositif 101 via le réseau local créé par la passerelle Internet 107 du domicile (ex. WiFi ou filaire). Ainsi, il est utile que le dispositif 101 soit connecté à ce réseau local (lien 106) et que le terminal 105 soit connecté à ce réseau local (lien 108).

L'adresse de contact (ex. l'adresse IP du dispositif 101) peut être préconfigurée dans le terminal 105. Cette adresse de contact peut également être déterminée par un mécanisme de découverte réseau de type « Bonjour », « Avahi », « Pastry », « ZeroConf », « UPnP », « SNMP », etc.

Le terminal 105 peut alors effectuer une requête auprès du dispositif 101 afin d'obtenir des informations relatives à l'interaction de l'utilisateur évoquée ci-avant.

La figure 2a présente deux ordinogrammes de mise en oeuvre détaillée, respectivement par un dispositif de communication 101 selon un mode de réalisation de l'invention et par un terminal.

Dans ce mode de réalisation, le dispositif 101 possède un état 201 d'attente d'événements d'interaction comme décrit précédemment. Ces événements peuvent être un sous-ensemble d'un groupe comprenant l'insertion d'une clef USB, la connexion d'un casque audio Bluetooth, etc.

Un identifiant (appelé « identifiant de fonction ») est associé à cet événement.

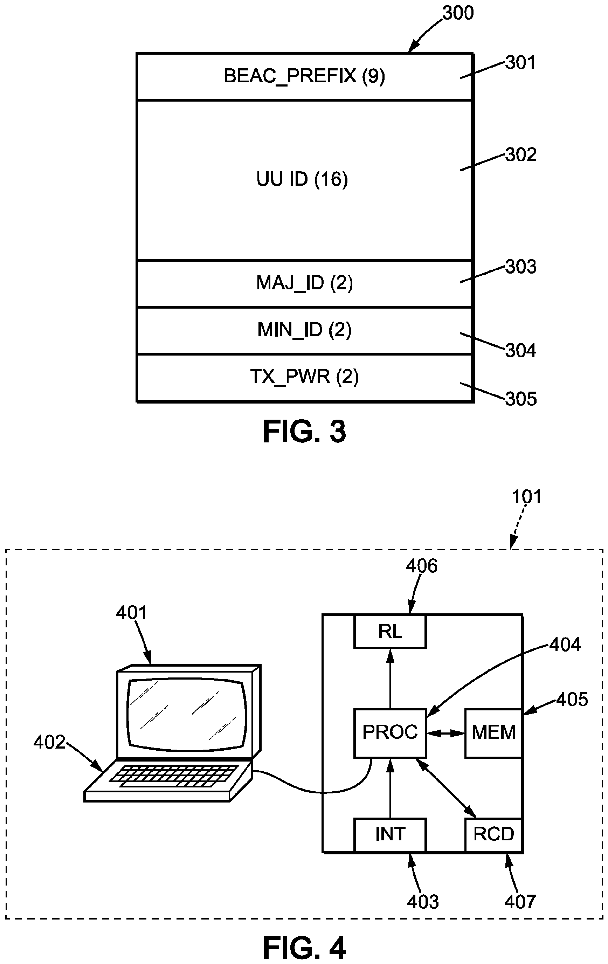

Si un événement est détecté (test 201, sortie OK), un message est envoyé via un réseau BLE (flèche 291) à l'aide, par exemple, d'un paquet de type iBeacon^{™} (étape 202). Ce message peut comporter (voir figure 3) un champ particulier contenant l'identifiant associé à l'événement. Si ce message ne comporte pas cet identifiant (ex. limitation technique ou choix d'implémentation), cet identifiant peut alors être stocké dans une pile mémoire dédiée à cet effet dans le dispositif de communication 101, par exemple une pile de type FILO (ou « First In Last Out » en anglais).

Un terminal 105 se trouvant à proximité peut alors recevoir ce message envoyé lors de l'étape 202 s'il se trouve à portée radio (dans le cas d'un réseau sans fil) (étape 211).

Une fois reçu, le terminal peut, de manière optionnelle, déterminer la distance estimée du terminal 105 au dispositif de communication 101. Il existe de nombreuses méthodes disponibles permettant une telle détermination, comme celle, par exemple, utilisée dans le protocole iBeacon^{™} (voir Figure 3).

Si cette distance estimée est supérieure à une distance préconfigurée dans le terminal (test 253a, sortie OK), le terminal est remis en configuration d'écoute du réseau (appelé « réseau courte distance ») pour la réception d'un nouveau message.

Dans le cas contraire (test 253a, sortie KO), le terminal envoie une requête (flèche 292) au dispositif 101 soit via le réseau « courte distance » soit, préférentiellement, via le réseau local créé par la passerelle Internet locale (ex. réseau WiFi).

Cette requête (flèche 292) contient éventuellement l'identifiant transmis avec le message précédent (flèche 291) si celui-ci contenait un identifiant de fonction.

Sur réception de la requête par le dispositif 101 (étape 204), la requête est analysée.

Par ailleurs, l'envoi du message (étape 202) par le dispositif 101 peut être réitéré, par exemple, de manière régulière (ex. toutes les secondes), tant que le dispositif de communication n'a pas reçu la requête mentionnée ci-avant (flèche 292 en provenance du terminal). Alternativement ou cumulativement, l'envoi du message est réitéré pendant un temps prédéterminé (ex. pendant 10 secondes après la détection de l'interaction). Alternativement ou cumulativement, l'envoi du message est réitéré un nombre de fois prédéterminé.

La survenance d'une ou plusieurs de ces conditions peut stopper la réitération.

Dans l'hypothèse où la requête (flèche 292) contient un identifiant de fonction, cet identifiant est extrait de la requête. Dans l'hypothèse où aucun identifiant n'est présent dans la requête (ex. choix d'implémentation), le dispositif de communication détermine le premier identifiant à utiliser dans la pile mémoire des identifiants de fonction prévue à cet effet, la pile pouvant être par exemple une pile FIFO (« First In First out » en anglais) ou une pile FILO (« First In Last out » en anglais).

En fonction de cet identifiant déterminé ou extrait, le dispositif de communication peut déterminer la réponse à cette requête (étape 205), réponse qui est en lien avec cet identifiant et donc l'événement détecté.

À titre d'illustration, cette réponse renvoyée au terminal (flèche 293) peut être, notamment :
- une page HTML permettant la configuration d'un équipement Bluetooth venant de se connecter au dispositif 101,
- un fichier XML de données détaillant le contenu d'une clef USB venant d'être introduite dans un port USB du dispositif 101,
- une page permettant le choix de la redirection des flux multimédia tel que le son ou la vidéo lors de la connexion d'une enceinte USB au dispositif 101 ou d'une enceinte filaire connectée au dispositif 101 via une prise « jack ».

Une fois reçue cette réponse est analysée (étape 213) par le terminal et affichée (étape 214) sur l'écran de celui-ci.

La figure 2b présente deux ordinogrammes alternatifs de mise en oeuvre détaillée respectivement mis en oeuvre par un dispositif de communication selon un autre mode de réalisation de l'invention et par un terminal.

Ces deux ordinogrammes sont proches de ceux décrits dans la Figure 2a. Ainsi, les blocs référencés sous la même référence numérique correspondent, sauf indication contraire, sensiblement aux mêmes étapes.

Dans ce mode de réalisation, l'étape active de détection de la proximité du terminal 105 et du dispositif 101 n'est pas réalisée par le terminal, mais par le dispositif 101.

Si un événement est détecté (test 201, sortie OK), le dispositif 101 active son dispositif de détection de proximité (ex. récepteur NFC). Si un terminal 105 est approché du dispositif 101 avec un émetteur de proximité activé (étape 251, ex. émetteur NFC), l'émission de cet émetteur (flèche 290) sera captée par le dispositif de détection de proximité (étape 252b).

Une fois cette émission captée, le dispositif 101 peut, de manière optionnelle, déterminer la distance estimée du terminal 105 au dispositif de communication 101.

Si cette distance estimée est supérieure à une distance préconfigurée dans le dispositif 101 (test 253b, sortie OK), le dispositif de détection de proximité reste activé pour détecter une nouvelle émission du terminal.

En outre, et même si la distance estimée est inférieure à la distance préconfigurée dans le dispositif 101 (test 253b, sortie KO), le dispositif 101 peut implémenter des conditions additionnelles (test 254b). Par exemple, si le délai entre la détection de l'interaction et la détection de la proximité dépasse un temps prédéterminé, il est possible de ne pas exécuter le reste du procédé décrit et de configurer le dispositif 101 afin qu'il se mette en attente d'une nouvelle détection d'interaction (test 254b, sortie KO).

Si toutes les conditions sont remplies pour permettre l'exécution du reste du procédé (test 254b, sortie KO), le dispositif 101 peut émettre un message (flèche 291) à destination du terminal (via le réseau courte-distance utilisée pour la détection de présence ou via un réseau local auquel le dispositif 101 et le terminal 105 sont connectés) (étape 202)

Ce message peut contenir l'identifiant de fonction associé à l'événement détecté. Si ce message ne comprend pas d'identifiant de fonction, il est utile de le stocker dans une pile mémoire pour une réutilisation future.

Sur réception de ce message (étape 211), le terminal 105 émet une requête (étape 212) vers le dispositif 101.

Cette requête (flèche 292) contient éventuellement l'identifiant transmis avec le message précédent (flèche 291) si celui-ci contenait un identifiant de fonction.

Sur réception de la requête par le dispositif 101 (étape 204), la requête est alors analysée.

Les étapes 212, 213, 205 et 214 restent inchangées par rapport à la figure 2a.

La figure 3 illustre un exemple de paquet émis par ondes radio, par exemple de type iBeacon^{™}, contenu dans un message émis par le dispositif de communication selon un mode de réalisation de l'invention (voir figure 2a, par exemple).

La partie « données » de ce message 300 peut ainsi comprendre cinq champs :
- un champ dit « préfix » de 9 octets indiquant que le paquet (ou message) est un paquet de détection de proximité (champ 301) ou un paquet de type iBeacon^{™} (par exemple 02 01 1A 1A FF 4C 00 02 15) ;
- un champ d'identifiant d'application de 16 octets (champ 302) ;
- un champ « majeur » de 2 octets (champ 303) ;
- un champ « mineur » de 2 octets (champ 304) ;
- un champ d'indication de puissance de 2 octets permettant d'indiquer la puissance estimée du signal sortant après 1 mètre de propagation. Ce champ permet au terminal recevant le signal d'estimer la véritable distance en fonction de la puissance réelle de réception du message (champ 305).

Lors de la réception d'un message de ce type par le terminal (c.-à-d. contenant dans l'exemple ci-dessus un champ « préfix » (301) égal à 02 01 1A 1A FF 4C 00 02 15), l'application associée au champ d'identifiant d'application (302) peut être activée.

Cette application activée peut alors extraire les valeurs respectives des champs « majeur » (303) et « mineur » (304).

Dès lors, il est possible de prévoir que l'étape d'envoi du message (étape 202) de la figure 2a inclut dans ce message l'identifiant de fonction correspondant à l'événement détecté dans le champ « majeur » (ou « mineur »). Dès lors, à la réception de ce message, le terminal peut extraire cet identifiant dans le champ correspondant.

La figure 4 illustre un dispositif de communication dans un mode de réalisation de l'invention.

La figure 4 représente un exemple de dispositif de communication 101 dans un mode de réalisation de l'invention.

Dans ce mode de réalisation, le dispositif 101 comporte un équipement électronique, comprenant une mémoire 405 pour stocker des instructions permettant la mise en oeuvre du procédé, le cas échéant, une pile d'identifiants et des données temporaires pour réaliser les différentes étapes du procédé tel que décrit précédemment.

L'ordinateur comporte en outre un circuit 404. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais).

Ce dispositif 101 comporte un ou plusieurs dispositifs d'interaction 403 pour permettre l'interaction comme décrit précédemment, une interface d'un réseau courte distance telle qu'une interface Bluetooth ou NFC, et une interface à un réseau local 406 tel qu'une interface réseau WiFi. Enfin, le dispositif 101 peut comporter, de manière optionnelle, pour permettre une interaction aisée avec un utilisateur, un écran 401 et un clavier 402. Bien entendu, le clavier est facultatif, notamment dans le cadre d'un dispositif 101 ayant un écran tactile, par exemple.

Par ailleurs, le schéma fonctionnel présenté sur la figure 2a ou 2b est un exemple typique d'un programme dont certaines instructions peuvent être réalisées auprès de dispositif 101 décrit. À ce titre, la figure 2a ou 2b peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes.

D'autres réalisations sont possibles.

Par exemple, la détection de présence peut être réalisée au moyen d'une transmission en champ proche (ou « NFC ») en ajoutant dans les messages NFC (ex. dans un champ personnalisé) l'identifiant de fonction mentionné ci-avant.

## Revendications

1. Dispositif de communication (101) configuré pour communiquer avec un terminal (105) grâce à une connexion sans fil courte distance (104), le terminal (105) comprenant plusieurs fonctions, chaque fonction courante desdites fonctions pouvant être exécutée à l'aide d'un identifiant de fonction propre à ladite fonction courante,
dans lequel le dispositif de communication (101) comprend une pluralité de dispositifs d'interaction (102, 103),
**caractérisé en ce que** le dispositif de communication (101) est configuré pour :
/a/ détecter un événement (201) relatif à un dispositif d'interaction parmi lesdits dispositifs d'interaction, ledit dispositif d'interaction étant un port USB, ledit événement étant un branchement d'un dispositif de stockage USB sur le dispositif de communication, et étant associé à un identifiant de fonction ;
/b/ émettre un message (291) à destination du terminal, comprenant l'identifiant de fonction et destiné à exécuter une fonction correspondante du terminal ;
/c/ recevoir, depuis le terminal, et via un réseau local, une requête d'accès (292) en lien avec ledit événement détecté, ladite requête d'accès étant une requête d'accès au contenu dudit dispositif de stockage USB.

2. Dispositif selon la revendication 1, configuré en outre pour réitérer l'émission de message /b/ tant qu'un sous-ensemble prédéterminé d'au moins une des conditions (203) suivantes n'est pas rempli :
- un délai entre la première émission dudit message et la réitération a dépassé un temps prédéterminé ;
- le dispositif de communication a reçu une requête conforme lors de la réception /c/ (292) ;
- le nombre de réitérations a dépassé un nombre prédéterminé.

3. Dispositif selon l'une des revendications précédentes, dans lequel l'émission /b/ est exécutée sur détection (211, 252a, 253a), par le dispositif de communication, du terminal à une distance prédéterminée dudit dispositif de communication.

4. Dispositif selon l'une des revendications précédentes, dans lequel le message émis est apte à permettre une détermination d'une distance (252a) au dispositif de communication par le terminal.

5. Dispositif selon l'une des revendications précédentes, dans lequel la connexion sans fil courte distance est une connexion de type NFC ou une connexion de type Bluetooth Low Energy.

6. Dispositif selon l'une des revendications précédentes, dans lequel l'émission dudit message (291) est effectuée via la connexion sans fil courte distance.

7. Dispositif selon l'une des revendications 1 à 5, dans lequel l'émission dudit message est effectuée sur requête dudit terminal, via ledit réseau local.

8. Dispositif selon l'une des revendications 1 à 5, dans lequel le dispositif de communication est en outre configuré pour :
- avant l'émission dudit message :
- émettre via la connexion sans fil courte distance et à destination dudit terminal un message d'activation, le message d'activation étant destiné à activer une application dudit terminal, et
- recevoir de la part dudit terminal et via ledit réseau local une requête de transmission dudit identifiant de fonction.

9. Procédé pour la communication entre un dispositif de communication et un terminal grâce à une connexion sans fil courte distance, le terminal comprenant plusieurs fonctions, chaque fonction courante desdites fonctions pouvant être exécutée à l'aide d'un identifiant de fonction propre à ladite fonction courante,
le dispositif de communication comprenant une pluralité de dispositifs d'interaction,
**caractérisé en ce que** le procédé comprend :
/a/ détecter un événement relatif à un dispositif d'interaction parmi lesdits dispositifs d'interaction, ledit dispositif d'interaction étant un port USB, ledit événement étant un branchement d'un dispositif de stockage USB sur le dispositif de communication, et étant associé à un identifiant de fonction;
/b/ émettre un message à destination du terminal, comprenant l'identifiant de fonction et destiné à exécuter une fonction correspondante du terminal ;
/c/ recevoir, depuis le terminal, et via un réseau local, une requête d'accès en lien avec ledit événement détecté, ladite requête d'accès étant une requête d'accès au contenu du dispositif de stockage USB.

10. Produit programme informatique comportant des instructions pour la mise en oeuvre du procédé selon la revendication 9, lorsque ce programme est exécuté par un processeur d'un dispositif de communication selon l'une des revendications 1 à 8.

## Patentansprüche

1. Kommunikationsvorrichtung (101), die konfiguriert ist, mittels einer drahtlosen Nahbereichsverbindung (104) mit einem Endgerät (105) zu kommunizieren, wobei das Endgerät (105) mehrere Funktionen enthält, wobei jede aktuelle Funktion der Funktionen mit Hilfe einer der aktuellen Funktion eigenen Funktionskennung ausgeführt werden kann,
wobei die Kommunikationsvorrichtung (101) eine Vielzahl von Interaktionsvorrichtungen (102, 103) enthält,
**dadurch gekennzeichnet, dass** die Kommunikationsvorrichtung (101) konfiguriert ist:
/a/ ein Ereignis (201) bezüglich einer Interaktionsvorrichtung unter den Interaktionsvorrichtungen zu erfassen, wobei die Interaktionsvorrichtung ein USB-Port ist, wobei das Ereignis ein Anschluss einer USB-Speichervorrichtung an die Kommunikationsvorrichtung ist, und einer Funktionskennung zugeordnet ist;
/b/ eine Nachricht (291) an das Endgerät zu senden, die die Funktionskennung enthält und dazu bestimmt ist, eine entsprechende Funktion des Endgeräts auszuführen;
/c/ vom Endgerät und über ein lokales Netzwerk eine Zugriffsanforderung (292) in Verbindung mit dem erfassten Ereignis zu empfangen, wobei die Zugriffsanforderung eine Zugriffsanforderung auf den Inhalt der USB-Speichervorrichtung ist.

2. Vorrichtung nach Anspruch 1, die außerdem konfiguriert ist, das Senden einer Nachricht /b/ zu wiederholen, so lange eine vorbestimmte Teileinheit von mindestens einer der folgenden Bedingungen (203) nicht erfüllt ist:
- eine Verzögerung zwischen dem ersten Senden der Nachricht und der Wiederholung hat eine vorbestimmte Zeit überschritten;
- die Kommunikationsvorrichtung hat eine entsprechende Anforderung beim Empfang /c/ (292) empfangen;
- die Anzahl von Wiederholungen hat eine vorbestimmte Anzahl überschritten.

3. Vorrichtung nach einem der vorhergehenden Ansprüche, wobei das Senden /b/ nach Erfassung (211, 252a, 253a), durch die Kommunikationsvorrichtung, des Endgeräts in einem vorbestimmten Abstand von der Kommunikationsvorrichtung ausgeführt wird.

4. Vorrichtung nach einem der vorhergehenden Ansprüche, wobei die gesendete Nachricht geeignet ist, eine Bestimmung eines Abstands (252a) zur Kommunikationsvorrichtung durch das Endgerät zu erlauben.

5. Vorrichtung nach einem der vorhergehenden Ansprüche, wobei die drahtlose Nahbereichsverbindung eine Verbindung des Typs NFC oder eine Verbindung des Typs Bluetooth Low Energy ist.

6. Vorrichtung nach einem der vorhergehenden Ansprüche, wobei das Senden der Nachricht (291) über die drahtlose Nahbereichsverbindung ausgeführt wird.

7. Vorrichtung nach einem der Ansprüche 1 bis 5, wobei das Senden der Nachricht auf Anforderung des Endgeräts über das lokale Netzwerk ausgeführt wird.

8. Vorrichtung nach einem der Ansprüche 1 bis 5, wobei die Kommunikationsvorrichtung außerdem konfiguriert ist:
- vor dem Senden der Nachricht:
- über die drahtlose Nahbereichsverbindung an das Endgerät eine Aktivierungsnachricht zu senden, wobei die Aktivierungsnachricht dazu bestimmt ist, eine Anwendung des Endgeräts zu aktivieren, und
- vom Endgerät und über das lokale Netzwerk eine Übertragungsanforderung der Funktionskennung zu empfangen.

9. Verfahren zur Kommunikation zwischen einer Kommunikationsvorrichtung und einem Endgerät mittels einer drahtlosen Nahbereichsverbindung, wobei das Endgerät mehrere Funktionen enthält, wobei jede aktuelle Funktion der Funktionen mit Hilfe einer der aktuellen Funktion eigenen Funktionskennung ausgeführt werden kann,
wobei die Kommunikationsvorrichtung eine Vielzahl von Interaktionsvorrichtungen enthält,
**dadurch gekennzeichnet, dass** das Verfahren enthält:
/a/ Erfassen eines Ereignisses bezüglich einer Interaktionsvorrichtung unter den Interaktionsvorrichtungen, wobei die Interaktionsvorrichtung ein USB-Port ist, wobei das Ereignis ein Anschluss einer USB-Speichervorrichtung an die Kommunikationsvorrichtung ist, und einer Funktionskennung zugeordnet ist;
/b/ Senden einer Nachricht an das Endgerät, die die Funktionskennung enthält und dazu bestimmt ist, eine entsprechende Funktion des Endgeräts auszuführen;
/c/ Empfang vom Endgerät und über ein lokales Netzwerk einer Zugriffsanforderung in Verbindung mit dem erfassten Ereignis, wobei die Zugriffsanforderung eine Zugriffsanforderung auf den Inhalt der USB-Speichervorrichtung ist.

10. Informatikprogrammprodukt, das Anweisungen zur Durchführung des Verfahrens nach Anspruch 9 aufweist, wenn dieses Programm durch einen Prozessor einer Kommunikationsvorrichtung nach einem der Ansprüche 1 bis 8 ausgeführt wird.

## Claims

1. Communication device (101) configured to communicate with a terminal (105) through a short-distance wireless connection (104), the terminal (105) comprising multiple functions, each current function of said functions being able to be executed with the aid of a function identifier specific to said current function, wherein the communication device (101) comprises a plurality of interaction devices (102, 103),
**characterized in that** the communication device (101) is configured to:
/a/ detect an event (201) relating to one interaction device from among said interaction devices, said interaction device being a USB port, said event being a connection of a USB storage device to the communication device, and being associated with a function identifier;
/b/ transmit a message (291) to the terminal, comprising the function identifier and intended to execute a corresponding function of the terminal;
/c/ receive, from the terminal, and via a local area network, an access request (292) linked to said detected event, said access request being a request to access the content of said USB storage device.

2. Device according to Claim 1, furthermore configured to reiterate the message transmission /b/ for as long as a predetermined subset of at least one of the following conditions (203) is not met:
- a period between the first transmission of said message and the reiteration has exceeded a predetermined time;
- the communication device has received a compliant request during the reception /c/ (292);
- the number of reiterations has exceeded a predetermined number.

3. Device according to either of the preceding claims, wherein the transmission /b/ is executed upon detection (211, 252a, 253a), by the communication device, of the terminal at a predetermined distance from said communication device.

4. Device according to one of the preceding claims, wherein the transmitted message is able to allow the terminal to determine a distance (252a) to the communication device.

5. Device according to one of the preceding claims, wherein the short-distance wireless connection is an NFC connection or a Bluetooth Low Energy connection.

6. Device according to one of the preceding claims, wherein said message (291) is transmitted via the short-distance wireless connection.

7. Device according to one of Claims 1 to 5, wherein said message is transmitted upon request from said terminal, via said local area network.

8. Device according to one of Claims 1 to 5, wherein the communication device is furthermore configured to:
- before the transmission of said message:
- transmit an activation message to said terminal via the short-distance wireless connection, the activation message being intended to activate an application on said terminal, and
- receive a request to transmit said function identifier from said terminal and via said local area network.

9. Method for communication between a communication device and a terminal through a short-distance wireless connection, the terminal comprising multiple functions, each current function of said functions being able to be executed with the aid of a function identifier specific to said current function,
the communication device comprising a plurality of interaction devices,
**characterized in that** the method comprises:
/a/ detecting an event relating to one interaction device from among said interaction devices, said interaction device being a USB port, said event being a connection of a USB storage device to the communication device, and being associated with a function identifier;
/b/ transmitting a message to the terminal, comprising the function identifier and intended to execute a corresponding function of the terminal;
/c/ receiving, from the terminal, and via a local area network, an access request linked to said detected event, said access request being a request to access the content of the USB storage device.

10. Computer program product comprising instructions for implementing the method according to Claim 9 when this program is executed by a processor of a communication device according to one of Claims 1 to 8.
